(19) Europäisches Patentamt
European Patent Office
Office européen des brevets

(11) Publication number: **0 021 601**
**A1**

(12) # EUROPEAN PATENT APPLICATION

(21) Application number: 80301699.7

(22) Date of filing: 22.05.80

(51) Int. Cl.³: C 21 B 13/00

(30) Priority: 25.05.79 US 42473

(43) Date of publication of application: 07.01.81 Bulletin 81/1

(84) Designated Contracting States: BE DE FR GB SE

(71) Applicant: WESTINGHOUSE ELECTRIC CORPORATION
Westinghouse Building Gateway Center
Pittsburgh Pennsylvania 15222(US)

(72) Inventor: Harvey II, Francis Joseph
3473 Treeline Drive
Murrysville, Pennsylvania(US)

(72) Inventor: Fey, Maurice Gerard
105 Teton Drive
Pittsburgh, Pennsylvania(US)

(74) Representative: van Berlyn, Ronald
23 Centre Heights
London NW3 6JG(GB)

(54) **Process for regenerating a reducing gas mixture from spent gas evolved in the production of sponge iron.**

(57) A process for regenerating a reducing gas mixture from direct reduction furnaces for the production of sponge iron characterized by the steps of providing an arc heater having spaced electrodes and an arc chamber communicating with a gas reformation chamber, striking an electric arc between the electrodes, introducing an arc gas comprising a gaseous mixture of CO, $CO_2$, $H_2$, and $H_2O$ to provide an elongated arc stream extending into the reformation chamber, and introducing into the arc heater a hydrocarbonaceous material to react with the arc gas to produce reformed gas.

EP 0 021 601 A1

./...

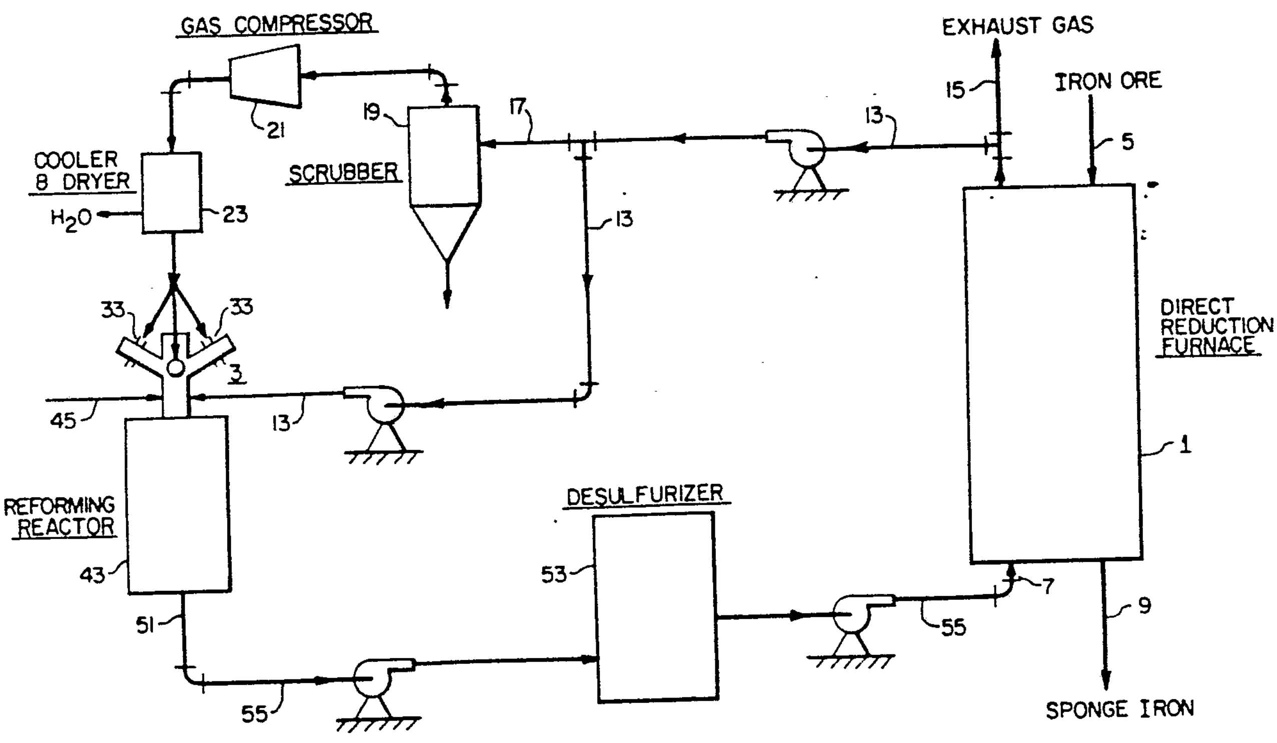

GAS COMPRESSOR
EXHAUST GAS
IRON ORE
15
13
19
17
21
5
COOLER
& DRYER
SCRUBBER
$H_2O$
23
13
33
33
DIRECT
REDUCTION
FURNACE
3
45
13
1
REFORMING
REACTOR
DESULFURIZER
43
53
7
9
51
55
55
SPONGE IRON


FIG.1.

TITLE MODIFIED
see front page



# PROCESS FOR REDUCING SPENT GAS GENERATED IN THE PRODUCTION OF SPONGE IRON

This invention relates to a process for the reformation of spent top gas to generate a reducing gas mixture for reuse in the production of metal from the ore and, more particularly, it pertains to such gas involved in the production of sponge iron.

There are a number of commercial processes for the production of sponge iron including the Midrex, HyL, SL/RN, and Wiberg Processes. The reductant used in the majority of the processes is either solid coal or coke (SL/RN and Wiberg), or natural gas (Midrex and HyL). The natural gas based processes account for about 70% of current world capacity and are projected to increase to around 80% by 1985. Most of these processes consist of at least two principal steps: (1) reduction of iron ore to produce sponge iron by reaction with a $CO-H_2$ containing gas mixture, and (2) reformation of part of the $CO_2$ and $H_2O$ in the spent reducing gas by a hydrocarbon reductant. Under certain conditions removal of sulfur from the reducing gas may also be required depending on the purity of the ore and reductant.

One of the principal disadvantages that is common to the vast majority of the existing direct reduction processes is inflexibility in the form of the reductant. A serious consequence of this inflexibility is the geographical nature of sponge iron production. For example, nearly all natural gas based direct reduction plants are located outside the United States because of the shrinking

BAD ORIGINAL

domestic supplies of this fuel. Although a number of these processes are capable of using coal, i.e., the Midrex Process, this requires the use of an auxiliary coal gasification process, which substantially increases process economics.

Another serious consequence of reductant inflexibility is the inability to rapidly respond to changes in the relative cost of the hydrocarbon reductant. Because of the current uncertainties in the price and availability of hydrocarbon fuels, uncontrolled rises in cost and production curtailment can occur. For these reasons a process for reforming spent top gas during the production of sponge iron in which either a solid, liquid or gaseous hydrocarbon can be used as the reductant is highly desirable.

According to the present invention, a process for reducing gas generated in sponge iron production comprises the steps of providing an arc heater having spaced cylindrical electrodes and forming an arc chamber communicating with a gas reformation chamber, striking an electric arc in an annular gap between the electrodes, introducing pressurized arc gas comprising a gaseous mixture of CO, $CO_2$, $H_2$, and $H_2O$ through the gap to extend the arc into an elongated arc stream extending into the reformation chamber, and introducing into the arc heater a hydrocarbonaceous material to react with the arc gas to produce reformed gas.

The advantage of the process of this invention is that it provides for the reformation of a reducing gas which is based on arc heater technology which overcomes the problem of reductant inflexibility which is inherent in many of the current direct reduction processes. The process of this invention employs hydrocarbon reductants of either the solid, liquid, or gas phase. Moreover, the arc heater-reforming procedure can be employed in conjunction with most all existing direct reduction furnaces when used for the reduction of many elements other than iron.

The invention will now be described, by way of

BAD ORIGINAL

example, with reference to the accompanying drawings in which:

Figure 1 is a flow diagram for the production of reformed reducing gas; and

Figure 2 is a perspective view with broken away portions showing a three phase arc heater system.

In accordance with this invention the process comprises the following steps:

(a) reducing the ore of a metal directly in the presence of a mixture of hydrocarbon-containing gases to an intermediate or fully reduced form of the metal,

(b) collecting the gaseous products from the reduction of step (a),

(c) providing an arc heater having spaced cylindrical electrodes and forming an arc chamber communicating with a gas reformation chamber,

(d) striking an electric arc in an annular gap between the electrodes,

(e) introducing pressurized arc gas comprising the hydrocarbon-containing gaseous products from step (a) through the gap to provide an elongated arc stream extending into the reformation chamber,

(f) introducing into the arc heater a hydrocarbonaceous material to react with the arc gas to produce reformed gas in the reformation chamber, and

(g) transferring the reformed gas to the furnace means at step (a) for reduction of the metal ore to a reduced form of the metal.

The means for performing that process are disclosed diagrammatically in Figure 1 and comprise a direct reduction of furnace 1, an arc heater system 3, and auxiliary structures for aiding in the process involved.

The direct reduction furnace 1 is a shell-like structure into which an ore of a metal, such as iron ore, is introduced at the top of the furnace through an inlet 5. The ore flows counterclockwise to reducing gas (comprising hydrocarbons) which is introduced through a gas inlet 7. The resulting reduced metal, such as sponge

BAD ORIGINAL

iron, is removed from the furnace 1 through an exit port 9.

Starting at a gas outlet 11 of the furnace 1, part of the spent top gas, which consists of CO, $CO_2$, $H_2$, and $H_2O$, flows toward the arc heater 3 via a conduit 13. Another part of the gas stream is exhausted at 15 to maintain an overall mass balance. A conduit 17 takes a greater part of the gas from the conduit 13 through a scrubber 19 for removing particulate and $H_2O$, a compressor 21, and a cooler and dryer 23 to remove water vapor. After these operations the gas principally consists of CO, $CO_2$, and $H_2$ which is ready for injection into the arc heater system 3.

The arc heater system 3 (Figure 2) comprises preferably three arc heaters 25 which are similar in construction and operation to that disclosed in the specification of U.S. Patent Nos. 3,705,975; 3,765,870; and 3,832,519. The arc heaters 25 are each single phase, self-stabilizing AC devices capable of power levels up to about 3500 kilowatts, or up to above 10,000 kilowatts for a three phase system as shown. In the practice of this invention, it is preferred that three arc heaters be provided, one for each of the three phases of the AC power supply.

Each arc heater 25 has two annular copper electrodes 27, 29 which are separated at a space or gap 31 about 1 millimeter apart to accommodate a line frequency power source of about 4 kV. An arc 33, an incoming feedstock gas 35 immediately blows the arc from the space into the interior of an arc chamber 37. The feedstock gas 31 comprises CO, $CO_2$, and $H_2$, from the cooler-dryer 23. The arc 33 rotates at a speed of about 1000 revolutions per second by interaction of the arc current with a DC magnetic field set up by externally mounted fuel coils 39, 41. The velocities yield a very high operating efficiency for equipment of this type and the elongated arc 33 is ultimately projected by the gas downstream and into a reforming reactor 43. Feedstock material is introduced through inlet ports 45, 47 into a manifold chamber 49 which is

BAD ORIGINAL

downstream of the arc heaters 15, so that the materials enter into the elongated arc 33 which projects into the manifold chamber. The feedstock material comprises reforming hydrocarbons of a solid liquid, or gaseous phase, or mixtures thereof, such as coal, oil, and methane ($CH_4$).

Within the reforming reactor 43 the reconditioned feedstock gas 35 which enters each arc heater 25 at the gap 31, co-mingles with the reforming hydrocarbons to form reformed gas which exits via an outlet 51, passes through a desulfurizer 53 from where it moves to the gas inlet 7 at the lower end of the furnace 1. The reformed gas comprises CO, $CO_2$, $H_2$, and $H_2O$ which are formed in endothermic reactions in accordance with one or more of the following formulas:

$$CO_2 + CH_4 \rightarrow 2CO + 2H_2 \quad (1)$$

$$H_2O + CH_4 \rightarrow CO + 3H_2 \quad (2)$$

The reforming reactor 43 is generally an enclosed chamber in which the hydrocarbons, the arc heated gas, and remaining spent top gas are mixed. For example, the reactor 43 comprises a straight cylindrical structure with a vortex flow. Where the reforming hydrocarbon is liquid, means, such as a nozzle, are provided for introducing it into the reactor. Where the reforming hydrocarbon is solid, crushing and grinding is preliminarily required to form a fine particulate. The solid particulate can be introduced into the reactor 43 pneumatically. The reformed gas, which principally consists of CO and $H_2$ with relatively small quantities of $CO_2$ and $H_2O$, flows through a conduit 55 to the furnace 1. Depending upon the sulfur content of the iron ore and the reformed gas, desulfurization of the reformed gas may be required. In the direct reduction furnace 1 the CO and $H_2$ react with the oxygen in the iron ore to produce sponge iron along with $CO_2$ and $H_2O$ which are the spent gases that exit from the furnace through the gas outlet 11 to resume the foregoing cycle.

BAD ORIGINAL

EXAMPLE

An example of the process of this invention is as follows:

For a sponge iron production rate of 100,000 MT/y using oil as the reforming hydrocarbon, heat and material balance calculations indicate that 12,000 kW of arc heaters (946 kWh/MT Fe) and 0.515 kg oil/s (146 kg of oil/MT Fe) are required to reform a top gas initially containing 35% CO, 20% $CO_2$, 29% $H_2$, and 16% $H_2O$ at 1123°K to a reducing gas containing 53.3% CO, 3.05% $CO_2$, 41.0% $H_2$, and 2.65% $H_2O$ at 1136°K. For purposes of the calculation, the following was assumed: (1) 1000 $m^3$ of top gas are produced per metric ton of sponge iron; (2) the temperature of the arc heated gases is 3500°K with a corresponding enthalpy of 13209 Joule/g; (3) the arc heater efficiency is 75% and the heat losses in the reforming reactor are 5% of the sensible heat in the reformed gas; (4) the reforming oil has a hydrogen to carbon ratio of 1.7 and an average molecular weight of 210 g/g-mol; (5) a 90% capacity factor; and (6) chemical equilibrium prevails in the reformed gas.

Accordingly, a unique characteristic of the arc heater is its ability to heat gases of virtually any composition in conjunction with other solid or liquid feedstocks. On this basis, the arc heater is capable of producing high temperature, high intensity gases of controlled composition and purity. A reforming process in which the arc heater is used as the heat source overcomes the reductant inflexibility problem of sponge iron production processes since any hydrocarbon can be used including coal, coke, oil, natural gas, and propane. Besides the flexibility of fuel form, the arc heater reforming step also reduces the overall hydrocarbon requirement relative to most of the existing processes, since in these processes the reforming hydrocarbon is also used to supply the endothermic heat of the reforming reaction, while in the currently disclosed process electricity is used to provide the required heat. Consequently, in situations

BAD ORIGINAL

where either a limited quantity of a specific hydrocarbon is available, i.e., enough to satisfy the reformed requirement, or electricity is the most economical form of energy, the arc heater based process is much superior.

What we claim is:

1. A process for reducing gas generated in sponge iron production comprising the steps of providing an arc heater having spaced cylindrical electrodes and forming an arc chamber communicating with a gas reformation chamber, striking an electric arc in an annular gap between the electrodes, introducing pressurized arc gas comprising a gaseous mixture of CO, $CO_2$, $H_2$, and $H_2O$ through the gap to extend the arc into an elongated arc stream extending into the reformation chamber, and introducing into the arc heater a hydrocarbonaceous material to react with the arc gas to produce reformed gas.

2. A process as claimed in claim 1 wherein the step of introducing into the arc heater a hydrocarbonaceous material to react with the arc gas to produce reformed gas are transferred to furnace means for reduction of an ore to sponge iron.

3. A process as claimed in claim 2 wherein the furnace means produces the gaseous mixture of CO, $CO_2$, $H_2$, and $H_2O$ which comprises the arc gas introduced into the gap of arc heater.

4. A process as claimed in any one of claims 1 to 3, including the steps of reducing the ore of a metal directly in the presence of a mixture of hydrocarbon-containing gases to an intermediate or fully reduced form of the metal and gaseous products, collecting the gaseous products from the previous reduction stage, providing the arc heater, striking an electric arc in the annular gap between the cylindrical electrodes, introducing pressur-

BAD ORIGINAL

ized arc gas comprising the gaseous products from previous reducing step through the gap to extend the arc into the elongated arc stream extending into the reformation chamber, introducing into the arc heater the hydrocarbonaceous material to react with the arc gas to produce reformed gas in the reformation chamber, and transferring the reformed gas to the furnace means for reduction of the metal ore to a reduced form of the metal.

5. A process for reducing gas generated in sponge iron production, substantially as hereinbefore described, with reference to the accompanying drawings.

BAD ORIGINAL

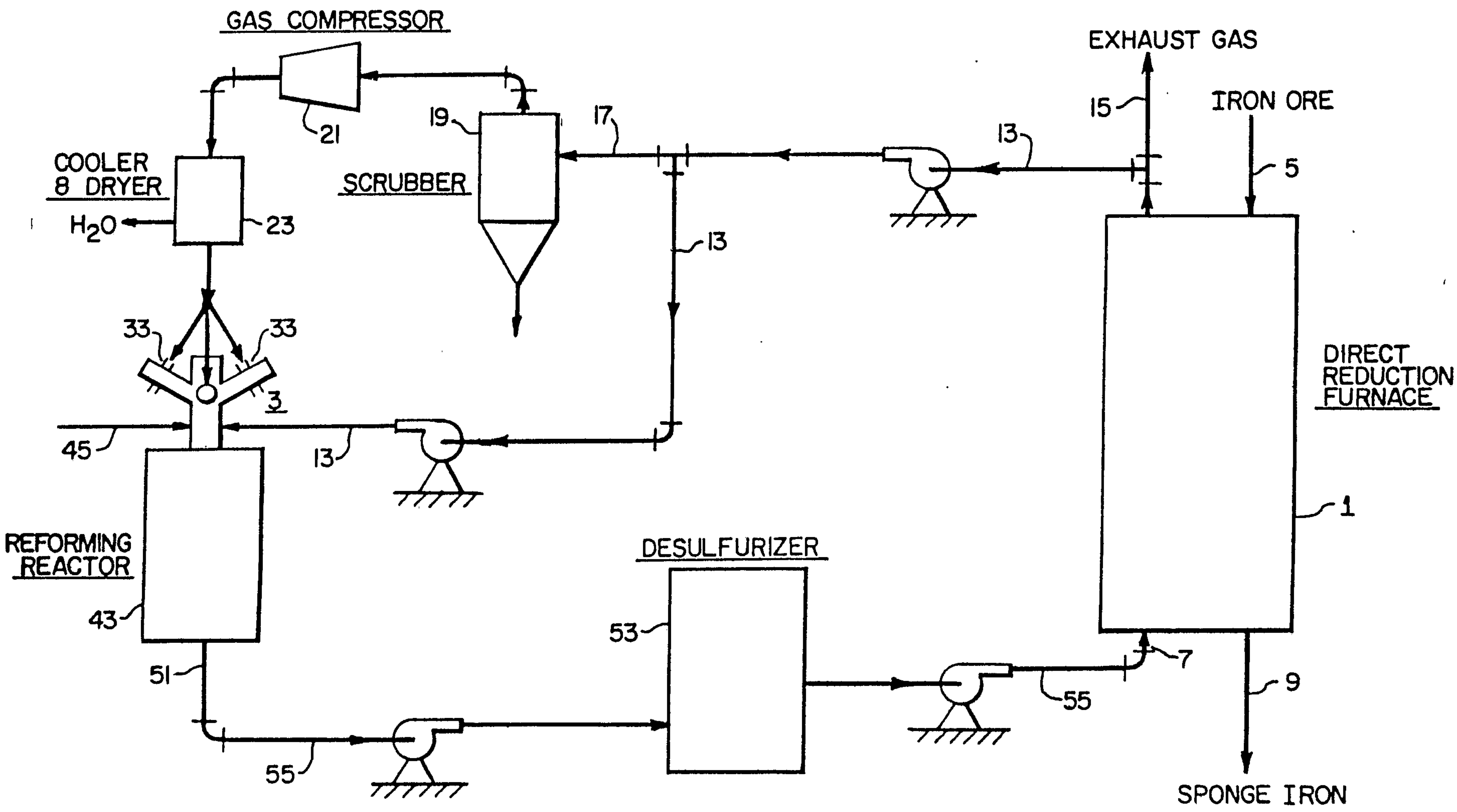
GAS COMPRESSOR
EXHAUST GAS
IRON ORE
15
13
5
21
19
17
COOLER
8 DRYER
SCRUBBER
$H_2O$
23
13
33
33
3
DIRECT
REDUCTION
FURNACE
45
13
1
REFORMING
REACTOR
DESULFURIZER
43
53
7
51
9
55
55
SPONGE IRON

FIG.1.

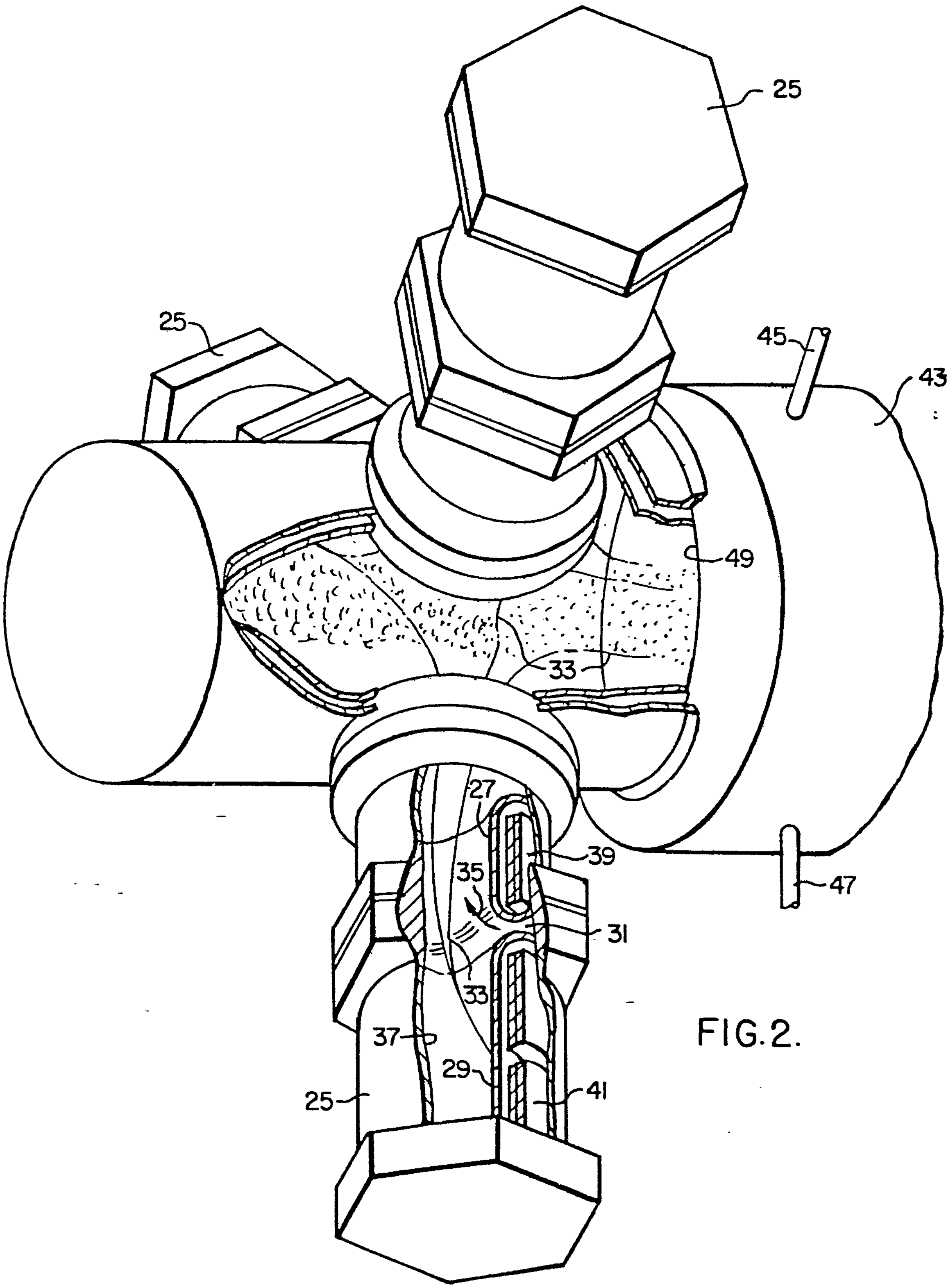


FIG.2.

0021601

European Patent Office

# EUROPEAN SEARCH REPORT

Application number

EP 80 30 1699

| Category | DOCUMENTS CONSIDERED TO BE RELEVANT — Citation of document with indication, where appropriate, of relevant passages | Relevant to claim | CLASSIFICATION OF THE APPLICATION (Int. Cl. 3) |
|---|---|---|---|
| | FR - A - 2 143 803 (C.R.M.)<br>* Claims 1,2; page 4, lines 28-31; figures 1-3 * | 1,3,4 | C 21 B 13/00 |
| | -- | | |
| | FR - A - 2 223 449 (S.K.F. INDUSTRIAL TRADING AND DEVELOPMENT COMPANY)<br>* Figures 1,3; claims 1,2 * | 1-5 | |
| | -- | | TECHNICAL FIELDS SEARCHED (Int.Cl. 3) |
| | BE - A - 833 049 (C.R.M.)<br>* Claims 1-13 * | 1-5 | C 21 B |
| | -- | | |
| | BE - A - 814 899 (C.R.M.)<br>* Claims 1-15 * | 1-5 | |
| | -- | | |
| | BE - A - 767 897 (C.R.M.)<br>* Claims 1-14 * | 1-5 | |
| | -- | | |
| | FR - A - 2 256 233 (C.R.M.)<br>* Claims 1-19 * | 1-5 | CATEGORY OF CITED DOCUMENTS |
| | -- | | X: particularly relevant<br>A: technological background<br>O: non-written disclosure<br>P: intermediate document<br>T: theory or principle underlying the invention<br>E: conflicting application<br>D: document cited in the application<br>L: citation for other reasons |
| | DE - A - 2 445 446 (SIDERURGICA DEDINI)<br>* Claims 1,2,4 * | 1-5 | |
| | -- | | |
| A | GB - A - 1 068 174 (ASSOCIATED ELECTRICAL INDUSTRIES)<br>./. | 1,3,4 | |
| A | The present search report has been drawn up for all claims | | &: member of the same patent family, corresponding document |

| Place of search | Date of completion of the search | Examiner |
|---|---|---|
| The Hague | 03-09-1980 | ELSEN |

EPO Form 1503.1 06.78

European Patent Office

# EUROPEAN SEARCH REPORT

Application number
EP 80 30 1699



| DOCUMENTS CONSIDERED TO BE RELEVANT | | | CLASSIFICATION OF THE APPLICATION (Int. Cl. 3) |
|---|---|---|---|
| Category | Citation of document with indication, where appropriate, of relevant passages | Relevant to claim | |
| | * Figure 1; claims 1,4; page 2, left-hand column *<br>-- | | |
| A | US - A - 3 189 438 (L.V. BOGDANDY)<br>* Figures 1,2; claim 1 *<br>---- | 1-5 | |
| | | | TECHNICAL FIELDS SEARCHED (Int. Cl. 3) |